# FASCICULE DE BREVET EUROPEEN

(11) **EP 0 692 831 B1**
(45) Date de publication et mention de la délivrance du brevet: **27.10.1999**
(21) Numéro de dépôt: 94401622.9
(22) Date de dépôt: 12.07.1994
(51) Int. Cl.: H01M 4/12, H01M 6/18, H01M 10/40

(54) **Procédé de laminage de film de lithium mince par décollement contrôlé**
Walzverfahren zur Herstellung dünner Lithiumfilme mit kontrollierter Abnahme
Process for rolling lithium into thin films using controlled

(43) Date de publication de la demande: 17.01.1996
(73) Titulaire: HYDRO-QUEBEC, Montréal Québec H2Z 1A4 (CA)
(72) Inventeur: Bouchard, Patrick, Fleurimont QC, C J1E 3L2 (CA); Guerin, Paul-Emile, Cap-de-la Madeliene, QC, C G8T 3E7 (CA); St-Amant, Guy, Trois-Rivières, QC, C G8Y 6N7 (CA); Laroche, Guy, Deauville, QC, C J1N 3N4 (CA)
(74) Mandataire: Sueur, Yvette

(56) Documents cités:
- EP-A- 0 285 476
- EP-A- 0 556 131
- US-A- 3 721 113
- US-A- 4 824 746
- DATABASE WPI Derwent Publications Ltd., London, GB; AN 81-48423D & JP-A-56 054 758 (HITACHI MAXELL)

## Description

L'invention concerne un procédé et une installation de laminage de film de lithium par décollement contrôlé. Plus précisément, l'invention concerne un procédé et une installation destinés à l'obtention de films minces de lithium caractérisés en ce qu'à la sortie du laminoir à la suite d'une seule passe, le film laminé à partir d'un feuillard de lithium, reste accolé sur la surface d'un des rouleaux de travail jusqu'en un point donné sur une partie de la circonférence de ce rouleau au-delà du point de rencontre entre les deux rouleaux, d'où on l'enroule sous une tension juste suffisante mais en tout cas inférieure à une tension correspondant à la limite élastique, pour le décoller de la surface du rouleau, obtenir du film de lithium extra mince et contribuer à la mise en forme du film. Le film de lithium obtenu de cette façon peut être utilisé tel quel dans un générateur électrochimique.

Dans le cadre d'un programme de développement d'accumulateurs au lithium, il faut pouvoir avoir recours à un procédé de fabrication d'électrodes de lithium mince en films continus. Les films de lithium, disponibles commercialement, ne répondent pas aux normes de qualité, de longueur et de largeur, et surtout de minceur exigées pour l'assemblage d'une pile au lithium à électrolyte polymère. Étant donné que le lithium mince a une très faible cohésion mécanique, on ne peut pas lui appliquer suffisamment de tension pour garder sa forme régulière, tel que le font les procédés de laminage conventionnels avec des métaux plus résistants.

Les procédés de laminage traditionnels, pour des métaux tels que l'acier ou l'aluminium, utilisent la force de cohésion de ceux-ci pour obtenir la planéité et l'épaisseur désirées. L'épaisseur est surtout obtenue par la pression exercée entre les rouleaux de travail, par la tension de retenue appliquée au métal à l'entrée du laminoir et par la vitesse de déroulement tandis que la mise en forme est essentiellement obtenue par le profil des rouleaux qui sont galbés mécaniquement et thermiquement, ainsi qu'à l'aide de la tension appliquée sur le métal à la sortie du laminoir. Pour les initiés à la manipulation du Li°, il est évident que l'on ne peut faire subir au Li° de telles contraintes physiques. Pour atteindre l'épaisseur voulue, on peut utiliser la pression des rouleaux et la vitesse. Mais, à cause de sa très faible cohésion mécanique, le Li° ne peut supporter qu'une minime tension de retenue à l'entrée du laminoir.

Il existe donc un besoin de mise en forme du film de Li°, les procédés de laminage traditionnels ne permettant pas de former un film de lithium ultra mince. En effet, on ne peut pas appliquer de fortes tensions au lithium, à la sortie du laminoir, étant donné sa faible limite élastique (579,13 KPa).

Un relevé de l'état de la technique, d'autre part, enseigne qu'il n'existe pas de méthode pratique de formation de films ultra minces de lithium.

Ainsi, le brevet U.S. 3.721.113, inventeur Hovsepian et daté du 20 mars 1973, décrit le laminage d'un film de lithium entre des rouleaux de travail dont la surface est en matériau polymère et la tension de surface ne dépasse pas 46 dynes par centimètre à 20°C.

Le brevet U.S. 4.502.903, inventeur Bruder, émis le 5 mars 1985, décrit une méthode de fabrication d'un laminé de lithium sur un plastique conducteur par contact direct entre une surface de lithium avec un feuillard de matériau plastique conducteur.

Le brevet U.S. 5.102.475, inventeurs Raynaud et coll., décrit le laminage d'un alliage de magnésium et de lithium entre des rouleaux de travail durs jusqu'à une épaisseur de 10 à 200 µm. Pour contourner le problème de l'adhésion du lithium pur sur les rouleaux, on a recours à un alliage de lithium et de magnésium.

Le document européen O 146 246 publié le 26 avril 1986, inventeurs Barry et coll., décrit une électrode protégée par un matériau imperméable aux fluides et non poreux.

Il existe donc un certain nombre de brevets tels que décrits ci-dessus mais on ne retrouve tout de même pas de lithium mince disponible commercialement en-dessous de 40 µm et en largeur et longueur appréciables tel que requis pour un accumulateur à électrolyte polymère, par exemple sous forme de rouleaux de 30 mètres de longueur par 15 centimètres de largeur et 22 microns d'épaisseur.

On voit donc que l'art antérieur ne permet pas de recourir à un procédé permettant d'obtenir en continu des films ultra minces de lithium, par laminage, surtout en une seule passe, et au surplus n'offre pas un mode de contrôle de la planéité du lithium produit.

L'invention a pour objet de pallier aux contraintes de l'art antérieur par la mise au point d'une méthode de mise en forme d'un film de lithium à la sortie des rouleaux de travail.

L'invention a aussi pour objet l'obtention en continu par laminage, de films ultra minces de lithium destinés à constituer l'anode d'une batterie à électrolyte polymère.

L'invention concerne un procédé destiné à l'obtention de films minces de lithium, à partir d'un feuillard de lithium de préférence enroulé sur un dérouleur, selon lequel de préférence on déroule le feuillard de lithium enroulé sur le dérouleur, on le fait passer entre des rouleaux de travail avec un lubrifiant de laminage pour laminer le feuillard en film mince, et on enroule ensuite le film mince sur un enrouleur. Le procédé est caractérisé en ce que l'on effectue le laminage de préférence en une seule passe, l'on utilise des rouleaux de travail ayant des surfaces de laminage en matériau auquel le lithium n'adhère pas, on utilise un lubrifiant de laminage compatible avec le lithium, volatile ou non volatile, et dans ce dernier cas il doit être compatible avec le fonctionnement d'un générateur s'il doit demeurer sur le lithium, on fait en sorte, par le choix du lubrifiant, que le film mince, à la sortie des rouleaux de travail, reste accolé sur la surface d'un des rouleaux, jusqu'en un point donné sur la circonférence de ce dernier au-delà du point de rencontre entre les deux rouleaux de façon à ce que l'angle formé entre le point de rencontre, le point donné et le centre du rouleau ne dépasse pas environ 90°, et l'on enroule le film mince obtenu à la sortie des rouleaux avec une suffisante tension mais en tout cas inférieure à la limite élastique du film de lithium pour l'arracher du rouleau au point donné, et obtenir ainsi un film d'excellente planéité.

Le terme compatible avec le lithium utilisé dans le présent mémoire descriptif et dans les revendications signifie l'absence de réaction chimique avec le lithium ou encore une réaction chimique limitée conduisant à la formation d'un film de passivation qui ne nuit pas aux échanges électrochimiques, à l'interface lithium/électrolyte d'un générateur.

On utilise de préférence un feuillard obtenu par extrusion entre 75 et 1000 µm. Le feuillard peut même être obtenu par extrusion juste avant le laminage.

Selon une réalisation préférée de l'invention, l'épaisseur du feuillard de lithium de préférence obtenu par extrusion, se situe entre environ 150 et 500 µm, de préférence environ 200 à 300 µm, et plus spécialement 250 µm.

Il est préférable que le déroulement du feuillard de lithium s'effectue sous une tension apte à amener le feuillard sous forme de film. De préférence on lamine le feuillard en une seule passe de façon à obtenir un film mince de lithium dont l'épaisseur se situe entre environ 5 µm et environ 100 µm, de préférence entre environ 20 µm et environ 30 µm.

Selon une autre réalisation préférée de l'invention, au départ de l'opération de laminage, on amorce l'enroulement du film mince avec une tension qui permet de faire décoller le film de la surface du rouleau lorsque le point donné mentionné ci-dessus forme un angle d'environ 90° avec le point de rencontre et le centre du rouleau. On augmente ensuite la tension pour que ce point donné se déplace en une position intermédiaire, notamment formant un angle d'environ 45°, entre 90° et le point de rencontre. Cet aspect du procédé est important pour atteindre des vitesses de laminage appréciables (plus de 20 à 50 m/min.), car il permet un contrôle et une optimisation des paramètres du laminage, notamment l'ouverture des rouleaux, la formulation de l'additif lubrifiant, l'ajustement de la vitesse, par le jeu de l'angle de pelage.

Selon une réalisation préférée de l'invention, l'on déverse un lubrifiant de laminage sur le feuillard à l'entrée des deux rouleaux de travail, le lubrifiant de laminage étant de préférence constitué par un liquide organique volatile de préférence un liquide aromatique, par exemple le toluène, de façon à ne pas laisser de résidu sur le film, et utilisé en quantité suffisante pour exercer une adhésion contrôlée du film sur le rouleau de travail en question. De préférence, le lubrifiant de laminage est du toluène.

Le liquide volatile peut aussi être additionné d'un additif facilitant le laminage. Dans ce cas, le liquide est de préférence un mélange d'hexanes et de toluène et l'additif est choisi pour sa compatibilité avec le lithium et de façon à ne pas nuire au fonctionnement électrochimique du générateur, auquel cas l'additif peu volatile peut être laissé à la surface de l'anode du générateur. Par exemple cet additif est un distéarate de polyoxyethylène dont le segment polyéthylène varie entre 200 et 5000. Le lubrifiant de laminage que l'on préfère utiliser en est un qui est compatible électrochimiquement avec le lithium et les autres éléments constitutifs d'un accumulateur à électrolyte polymère.

D'habitude, on utilise des rouleaux dont le profil de surface est inférieur à 1 µm.

De préférence, l'opération de laminage s'effectue dans l'air renfermant au plus 1% d'humidité relative.

Selon une autre réalisation préférée de l'invention, le passage du feuillard dans le laminoir comportant au moins deux rouleaux de travail réduit l'épaisseur du feuillard de 90% environ. De préférence, l'on fait sortir le film mince du laminoir à une vitesse qui peut aller jusqu'à 50 m/min., de préférence à une vitesse allant jusqu'à 20 m/min., en utilisant le jeu de l'angle de pelage pour optimiser les paramètres du laminage, c'est-à-dire la vitesse, la formulation du lubrifiant et l'ouverture des rouleaux.

Selon une autre réalisation préférée de l'invention, les rouleaux de laminage sont en polyacétal.

Le lubrifiant de laminage que l'on préfère utiliser en est un qui est soit volatile, soit compatible électrochimiquement avec le lithium et les autres éléments constitutifs d'un accumulateur à électrolyte polymère auquel cas un résidu de lubrifiant peut être laissé en surface du lithium. On pourra par exemple se référer à la demande de brevet canadien déposée ce jour et portant sur de tels additifs.

L'invention va être mieux comprise par les dessins annexés donnés à titre purement illustratifs mais sans caractère limitatif, dans lesquels
- la figure unique est un schéma représentatif d'une opération de laminage selon la présente invention.

On verra qu'un feuillard de lithium 1 d'une épaisseur d'environ 250 micromètres fixé sur un dérouleur (non illustré) est passé entre deux rouleaux de travail 3 et 5 en polyacétal. On applique une pression suffisante aux deux rouleaux dans les sens indiqués par les flèches 7 et 9 pour réduire l'épaisseur du feuillard d'environ 90%. À l'entrée du feuillard 1 entre les rouleaux de laminage, on déverse un lubrifiant de laminage 11, notamment du toluène à partir d'un bec verseur 13.

À la sortie des deux rouleaux de laminage, le feuillard de lithium s'est transformé en un film 15 dont l'épaisseur se situe à environ 25 micromètres. D'autre part, on s'apercevra que le film 15 reste accolé à la surface du rouleau 3 depuis le point de rencontre 17 entre les deux rouleaux 3 et 5 jusqu'en un point donné limite 19 sur la circonférence du rouleau 3 formant un angle α d'environ 90° avec le point de rencontre 17.

On enroule ensuite le film 15 sur un enrouleur (non illustré) avec suffisamment de tension, déterminée empiriquement pour d'une part faire décoller le film 15 du point 19 et le ramener graduellement au point 21 d'où l'opération se poursuivra sans autre changement.

Normalement, au point 21, l'angle formé β sera d'environ 45° étant entendu que cet angle pourra varier selon les circonstances et les propriétés désirées du film de lithium 15.

L'invention est aussi illustrée par les exemples de réalisation qui suivent donnés encore une fois sans caractère limitatif.

### Exemple 1

Un feuillard de lithium 1 extrudé de 250 micromètres d'épaisseur et de 57 mm de largeur est utilisé comme matériel de départ. Celui-ci est fixé au dérouleur, passé entre les rouleaux de laminage 3 et 5 et fixé à l'enrouleur. Une pression suffisante pour amincir le film est appliquée sur les rouleaux de laminage. Ces rouleaux sont en polyacétal et ont un diamètre de 20 mm. Du toluène 11 est ajouté goutte à goutte, sur le feuillard, à l'entrée du laminoir, à un débit de 8 ml/min. Le toluène est préalablement déshydraté sur tamis moléculaire afin d'obtenir une concentration d'eau inférieure à 10 ppm. Au départ, l'angle initial sur le rouleau 3 est de 90°. Une fois la planéité ajustée on ramène l'angle à 45° en augmentant la tension. On laisse adhérer le film de lithium à cet angle sur le rouleau de travail afin de contrôler parfaitement la tension appliquée sur celui-ci. La vitesse est en même temps graduellement portée à un maximum de 5 m/min. La pression exercée sur les rouleaux est ajustée de façon à obtenir en une seule passe un film de lithium de 25 micromètres d'épaisseur homogène à ± 2 µm, et de quelques dizaines de mètres de longueur. On voit donc qu'on peut fonctionner en continu sans rejet.

En variante, pendant l'opération, le toluène est remplacé soudainement par de l'hexanes à un même débit. L'épaisseur augmente brusquement à 90 micromètres. La planéité du film devient extrêmement mauvaise ce qui nous oblige à diminuer la pression exercée sur les rouleaux de travail. Le film ainsi obtenu n'est plus assez mince et de bonne planéité pour contrôler son décollement sur un des rouleaux de travail. Quand on parle de planéité, on désigne la forme plane du film par opposition à son profil ou son épaisseur.

On voit donc que l'hexanes tel qu'employé dans l'art antérieur n'a pas les qualités lubrifiantes nécessaires pour être utilisé seul dans ce procédé afin de produire un film continu de lithium mince en une seule passe.

### Exemple 2

Un feuillard continu de lithium extrudé de 250 micromètres d'épaisseur et de 143 mm de largeur est aminci à l'aide du procédé de laminage en question. Le film est installé sur l'appareil entre les rouleaux de travail. La pression sur les rouleaux est augmentée afin d'amincir le film d'environ 90%. Un lubrifiant est ajouté sur le film de lithium à un débit de 6 ml/min. Ce lubrifiant est composé d'un mélange de solvants auquel on ajoute un additif de laminage, soit de l'hexanes et du toluène secs dans un rapport 9:1 et 0,2% p/p POE 200 distéarate de formule

CH₃-(CH₂)₁₆-COO-(CH₂-CH₂-O)ₙ-OOC(CH₂)₁₆-CH₃

où n est choisi de sorte que le segment polyéther possède une masse moléculaire de 200.

Cet additif permet de porter la vitesse de laminage à 20 m/min. et d'obtenir un film de lithium mince d'excellente qualité, compatible électrochimiquement lorsque utilisé dans un générateur à électrolyte polymère. Par le même procédé on a pu obtenir des films continus de plus de 300 mètres de longueur.

### Exemple 3

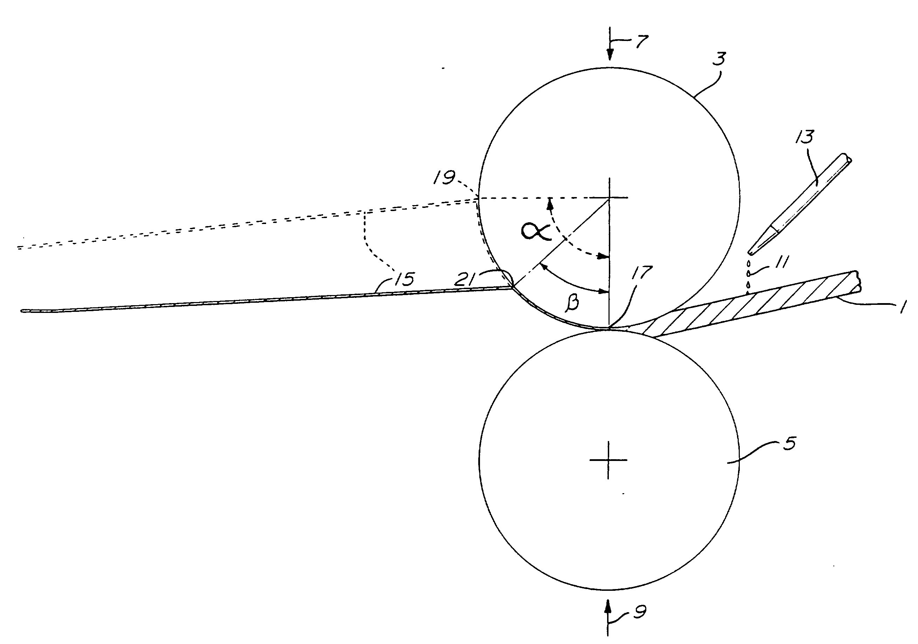

Cet exemple démontre le laminage en continu et en une seule passe d'un film de lithium de moins de 30 micromètres (µm). Le dispositif utilisé est celui décrit à la Figure 1 et le laminage est effectué dans une atmosphère anhydre contenant moins de 1% d'humidité relative. Les rouleaux sont constitués de polyacétal et ont un diamètre de 20 mm; le lithium de départ est constitué d'un feuillard extrudé de 250 micromètres (µm) d'épaisseur. Les solvants et au besoin un additif sont préalablement déshydratés sur tamis moléculaire afin d'obtenir une concentration d'eau inférieure à 10 ppm.

Dans un premier temps, on tente de laminer en continu un feuillard de lithium de 57 mm de largeur et de l'amincir en une seule passe à 25 µ. Lorsqu'aucun liquide lubrifiant n'est utilisé lors du laminage, le lithium colle immédiatement sur les rouleaux et le procédé ne fonctionne pas; avec l'ajout d'hexane, la lamination est impossible à réussir à moins de réduire considérablement le taux d'amincissement du feuillard. Au mieux nous avons pu obtenir un film de lithium de 90 µ en une seule passe dont la planéité est extrêmement mauvaise. Donc, l'hexane, tel qu'employé dans l'art antérieur, n'a pas les qualités lubrifiants suffisantes pour être utilisé seul dans un procédé continu à une seule passe pour obtenir un lithium de moins de 25 µm.

Lorsque le laminage est effectué avec un liquide lubrifiant constitué de toluène, ajouté au rythme de 8 ml/min. sur un feuillard extrudé de 57 mm de largeur, le laminage en continu de lithium à 25 µm devient possible et une vitesse maximale de 5 m/min. est obtenue en laissant adhérer le film laminé au rouleau supérieur à un angle de 45° par rapport au point donné, le point de rencontre et le centre du rouleau, tel qu'illustré à la Figure 1. Cette opération permet de contrôler parfaitement la tension appliquée sur le film libre et donne un lithium de planéité excellente. Des longueurs de quelques dizaines de mètres peuvent ainsi être obtenues en continu. Le passage rapide en cours d'opération du toluène à l'hexane, fait remonter instantanément l'épaisseur du lithium à environ 90 µm et on retrouve un lithium de très mauvaise planéité.

L'intérêt d'ajouter des additifs de laminage dans cette invention est démontré en utilisant un lithium extrudé de 250 µm de 143 mm de largeur. Le dispositif des essais précédents est utilisé avec une solution d'hexane et de toluène dans un rapport 9:1 contenant un POE distéarate 200 (mol. wt.) à la concentration de 0,2% p/p. Un excès de solution lubrifiante est ajouté sur le feuillard de lithium extrudé au taux de 6 ml/min. Dans ces conditions un film de lithium de 22 µm d'excellente planéité est obtenu en une seule passe à une vitesse de laminage de plus de 20 m/min. Ce procédé encore non-optimal permet en outre de produire des rouleaux de films laminés de plus de 300 mètres de long dont l'épaisseur est constante à plus ou moins 2 µm. Les productions successives sont très reproductibles d'un essai à l'autre et les taux de pertes ou interruptions du procédé sont négligeables; des productions plus importantes sont ainsi possibles à partir de rouleaux lithium extrudés plus longs ou à partir d'une alimentation du laminoir directement à partir d'une extrudeuse.

### Exemple 4

Le lithium de 22 µm produit en utilisant l'additif de l'exemple 3 est utilisé comme anode d'un générateur au lithium fonctionnant à 60°C. L'aspect visuel du lithium est excellent, lithium brillant sans aucune coloration, et le profil de surface obtenu au Dektak® (modèle 3030 de la compagnie VEECO, U.S.A.) fluctue en-deça de 3 µm. Pour cet essai de laboratoire, le feuillard de lithium est légèrement appliqué sous pression à un feuillard de nickel mince pour assurer la collection du courant. L'électrolyte utilisé est constitué d'un électrolyte polymère constitué d'un copolymère de l'oxyde d'éthylène et de méthylglycidyl éther et d'un sel de lithium, le (CF₃SO₂)₂NLi dans un rapport oxygène sur lithium (O/Li) de 30/l. La cathode composite est constituée d'oxyde de vanadium et de noir de carbone dispersée dans de l'électrolyte polymère et possède une capacité de 5 C/cm². La surface active de la pile ainsi constituée est de 3,9 cm². L'impédance initiale de cette pile à 60°C est de 15 Ω, c'est-à-dire équivalent ou inférieure aux meilleurs lithium obtenus commercialement. Les propriétés de cyclage de cette pile utilisant le lithium de l'exemple 3 sont excellentes après 100 cycles et le taux d'utilisation de la pile demeure au moins équivalent aux piles semblables réalisées avec du lithium commercial, soit environ 90% de la valeur initiale stabilisée après 10 cycles. Cet exemple confirme que la présence du distéarate de POE non-volatile laissé à la surface du lithium ne nuit pas au bon fonctionnement du générateur. Ce résultat s'explique par la conductivité électrolytique engendré par la présence du segment POE solvatant de l'additif et par la compatibilité chimique de ce dernier avec le lithium. Dans un essai indépendant, la conductivité électrolytique de cet additif, lorsque la teneur en sel (CF₃SO₂)₂NLi est de 30/l, est d'environ l X l0⁻⁵ S.cm.

### Exemple 5

Dans cet exemple nous avons évalué à la température de 25°C l'impédance de piles symétriques Li°/électrolyte polymère/Li° réalisées à partir de lithium laminé sans additif puis recouverts d'un excès de divers matériaux lubrifiants possibles.

La quantité de lubrifiant utilisé par unité de surface de lithium est de 0,03 mg/cm². Cette valeur correspond à un excès de lubrifiant par rapport à ce qui est nécessaire pour la lamination selon l'exemple 3, mais le but visé est d'amplifier et d'accélérer l'effet électrochimique des divers additifs. Les valeurs d'impédances sont données pour des piles dont la surface active est de 3,9 cm². L'électrolyte de l'exemple 4 est également utilisé pour la réalisation des piles qui sont assemblées par pressage à chaud sous vide.

Pour les divers matériaux utilisés, les résultats sont les suivants:

| | | Impédance |
|---|---|---|
| 1) | Le distéarate de POE 200 (mol. Wt.) | 113 Ω |
| 2) | Le distéarate de POE 600 (mol. Wt.) | 133 Ω |
| 3) | L'acide stéarique pure | 840 Ω |
| 4) | Le POE pur de masse molaire 500 | 139 Ω |

Les valeurs observées confirment l'influence du segment POE sur la conductivité électrolytique des additifs et permettent de conclure que l'acide stéarique souvent utilisé comme lubrifiant de laminage de métaux conventionnels est incompatible avec le lithium en vue d'un usage dans un générateur électrochimique.

### Exemple 6

Dans cet exemple on compare l'effet de divers additifs de laminage connus pour leurs propriétés lubrifiantes sur l'efficacité du laminage en une passe de lithium de 250 µm à environ 30 µm.

Pour effectuer ces comparaisons, on amorce la lamination dans des conditions semblables à celles de l'exemple 3 en utilisant l'additif de distéarate de POE 200. Lorsque le laminage est en cours, on change la composition de la solution en remplaçant le distéarate de POE par les autres additifs. L'effet de l'addition s'observe immédiatement en suivant l'épaisseur du film de lithium laminé, sa planéité et son apparence visuelle. Lorsque la solution contenant le distéarate est remplacée par une solution de stéarate d'éthyle de concentration 0,15% p/p, l'épaisseur du lithium monte brusquement de 40 à 90 µm et avec perte de planéité du lithium laminé.

Lorsque l'on passe à une solution de laminage à base du lubrifiant de laminage EPAL® 1012 (alcool linéaire en C₁₀) de la compagnie américaine Ethyl Corporation on constate que l'épaisseur du lithium laminé monte progressivement au-delà de 65 µm et le lithium produit devient collant sur le centre des rouleaux alors que les côtés deviennent irréguliers (ondulations).

Lorsque l'on passe à une solution de laminage à base de POE 5000 dans le toluène, on observe une remontée rapide de l'épaisseur du lithium laminé à 90 µ avec perte de planéité.

Ces essais illustrent l'importance des formulations à base de stéarates qui agissent comme lubrifiants et comportent des fonctions solvatantes, notamment à base de POE. Ces formulations privilégiées mais non-limitatives sont également supérieures à des additifs à base de POE pur en terme de procédé de laminage même si les propriétés de conducteurs électrolytiques sont dans ce cas adéquates comme illustré dans l'exemple 5.

## Revendications

1. Procédé de laminage destiné à l'obtention de films minces de lithium, à partir d'un feuillard de lithium selon lequel on fait passer le feuillard entre des rouleaux de travail avec un lubrifiant de laminage pour laminer le feuillard en film mince, et on enroule ensuite ledit film mince sur un enrouleur, caractérisé en ce que l'on utilise des rouleaux de travail ayant des surfaces de laminage en matériau auquel le lithium n'adhère pas, on utilise un lubrifiant de laminage compatible avec le lithium, volatile ou non volatile, et dans ce dernier cas il doit être compatible avec le fonctionnement d'un générateur s'il doit demeurer sur le lithium, on fait en sorte, par le choix du lubrifiant, que le film mince, à la sortie des rouleaux de travail, reste accolé sur la surface d'un des rouleaux, jusqu'en un point donné sur la circonférence de ce dernier au-delà du point de rencontre entre les deux rouleaux de façon à ce que l'angle formé entre ledit point de rencontre, ledit point donné et le centre du rouleau ne dépasse pas environ 90°, et l'on enroule le film mince obtenu à la sortie des rouleaux avec une tension suffisante mais en tout cas inférieure à la limite élastique du film de lithium pour l'arracher dudit rouleau audit point donné, et obtenir ainsi un film d'excellente planéité.

2. Procédé selon la revendication 1, selon lequel le feuillard est enroulé sur un dérouleur, et on déroule ensuite le feuillard de lithium enroulé sur le dérouleur.

3. Procédé selon la revendication 1, caractérisé en ce que ledit feuillard est obtenu par extrusion entre 75 et 1000 µm.

4. Procédé selon la revendication 1, caractérisé en ce que ledit feuillard est obtenu par extrusion juste avant le laminage.

5. Procédé selon la revendication 1, caractérisé en ce qu'on utilise un lubrifiant de laminage volatile.

6. Procédé selon la revendication 1, caractérisé en ce que l'épaisseur du feuillard de lithium se situe entre environ 150 et 500 µm.

7. Procédé selon la revendication 4, caractérisé en ce que l'épaisseur du feuillard de lithium est d'environ 200 à 300 µm.

8. Procédé selon la revendication 2, caractérisé en ce que le déroulement du feuillard de lithium s'effectue sous tension.

9. Procédé selon la revendication 8, caractérisé en ce que l'on lamine le feuillard de façon à obtenir un film mince de lithium dont l'épaisseur se situe entre environ 5 µm et environ 100 µm.

10. Procédé selon la revendication 9, caractérisé en ce que le film mince de lithium a une épaisseur qui se situe entre environ 20 µm et environ 30 µm.

11. Procédé selon la revendication 1, caractérisé en ce qu'au départ de l'opération de laminage, on amorce l'enroulement du film mince avec une tension qui permet de faire décoller le film de la surface du rouleau lorsque ledit point donné forme un angle d'environ 90° avec ledit point de rencontre et le centre du rouleau, on augmente ensuite la tension pour que ce point donné se déplace en une position intermédiaire entre 90° et ledit point de rencontre.

12. Procédé selon la revendication 1, caractérisé en ce que ladite position intermédiaire se situe à environ 45° par rapport audit point de rencontre et le centre du rouleau.

13. Procédé selon la revendication 11, caractérisé en ce que l'on contrôle ladite position dudit angle de façon à optimiser les paramètres du laminage, tels que nature du lubrifiant, ouverture des rouleaux, vitesse du laminage, et épaisseur du film obtenu.

14. Procédé selon la revendication 9, caractérisé en ce que l'on déverse un lubrifiant de laminage sur le feuillard à l'entrée des deux rouleaux de laminage, ledit lubrifiant de laminage étant constitué par un liquide organique volatile ne nuisant pas au bon fonctionnement du générateur de façon à ne pas laisser de résidu sur le film, et étant utilisé en quantité suffisante pour exercer une adhésion contrôlée du film sur ledit rouleau.

15. Procédé selon la revendication 14, caractérisé en ce que le lubrifiant de laminage comprend un hydrocarbure aromatique.

16. Procédé selon la revendication 15, caractérisé en ce que le lubrifiant de laminage est essentiellement constitué de toluène.

17. Procédé selon la revendication 14, caractérisé en ce que le liquide organique volatile est additionné d'un additif non volatile compatible avec le lithium et facilitant le laminage, et compatible aussi avec le fonctionnement d'un générateur électrochimique.

18. Procédé selon la revendication 17, caractérisé en ce que le liquide organique volatile est constitué d'un mélange d'hexanes et de toluène.

19. Procédé selon la revendication 18, caractérisé en ce que ledit additif est un distéarate de polyoxyéthylène dont le segment polyéthylène varie entre 200 et 5000.

20. Procédé selon la revendication 17, caractérisé en ce que le lubrifiant est constitué d'un liquide aliphatique et/ou d'un liquide aromatique additionné d'un distéarate de polyoxyéthylène dont le segment polyéthylène varie entre 200 et 5000.

21. Procédé selon la revendication 1, caractérisé en ce que l'on utilise des rouleaux dont le profil de surface est inférieur à 10 µm.

22. Procédé selon la revendication 1, caractérisé en ce que l'opération de laminage s'effectue dans l'air renfermant au plus 1% d'humidité.

23. Procédé selon la revendication 1, caractérisé en ce que le passage du feuillard dans le laminoir comportant au moins les deux rouleaux de travail réduit l'épaisseur du feuillard de 90% environ.

24. Procédé selon la revendication 1, caractérisé en ce que l'on fait sortir le film mince du laminoir à une vitesse qui peut aller jusqu'à 50 m/min., et que l'on utilise l'angle de décollement pour ajuster finement les paramètres du laminage, tels que nature du lubrifiant, ouverture des rouleaux, vitesse du laminage, et épaisseur du film obtenu.

25. Procédé selon la revendication 24, caractérisé en ce que le film mince sort du laminoir à une vitesse allant jusqu'à 20 m/min.

26. Procédé selon la revendication 21, caractérisé en ce que l'on utilise des rouleaux de laminage en polyacétal.

27. Procédé selon la revendication 1, caractérisé en ce que l'on utilise un lubrifiant de laminage compatible électrochimiquement avec le lithium et autres éléments d'un accumulateur à électrolyte polymère.

## Patentansprüche

1. Walzverfahren zur Herstellung dünner Lithiumfolien aus Lithiumbandmaterial, wobei das Bandmaterial mit einem Walzschmiermittel zwischen Arbeitswalzen hindurchgeführt wird, um das Bandmaterial zu einer dünnen Folie zu walzen, und die dünne Folie dann auf einem Wickler aufgewickelt wird, dadurch gekennzeichnet, daß Arbeitswalzen mit Walzflächen aus einem Material verwendet werden, an dem das Lithium nicht haftet, daß ein Walzschmiermittel verwendet wird, das mit dem Lithium verträglich und flüchtig oder nicht-flüchtig ist, und das in letzterem Fall mit der Funktionsweise eines Generators verträglich ist, wenn es dauerhaft auf dem Lithium verbleiben soll, so daß durch die Wahl des Schmiermittels bewirkt wird, daß die dünne Folie beim Verlassen der Arbeitswalzen bis zu einem bestimmten Punkt am Umfang einer der Walzen, der jenseits des Punkts liegt, an dem die beiden Walzen in Kontakt stehen, an der Oberfläche einer der Walzen haften bleibt, so daß der Winkel, der zwischen dem Kontaktpunkt, dem bestimmten Punkt und dem Mittelpunkt der Walze etwa 90° nicht übersteigt, und daß die beim Verlassen der Walzen erhaltene dünne Folie mit einer Spannung aufgewickelt wird, die ausreichend ist, um sie an dem bestimmten Punkt von der Walze abzuziehen, aber in jedem Fall unter der Elastizitätsgrenze der Lithiumfolie liegt, um so eine Folie mit hervorragender Ebenheit zu erhalten.

2. Verfahren nach Anspruch 1, bei dem das Bandmaterial auf einem Abwickler aufgewickelt und das auf dem Abwickler aufgewickelte Lithiumbandmaterial dann abgewickelt wird.

3. Verfahren nach Anspruch 1, dadurch gekennzeichnet, daß das Bandmaterial durch Extrusion mit zwischen 75 und 1.000 µm erhalten wird.

4. Verfahren nach Anspruch 1, dadurch gekennzeichnet, daß das Bandmaterial durch Extrusion unmittelbar vor dem Walzen erhalten wird.

5. Verfahren nach Anspruch 1, dadurch gekennzeichnet, daß ein flüchtiges Walzschmiermittel verwendet wird.

6. Verfahren nach Anspruch 1, dadurch gekennzeichnet, daß die Dicke des Lithiumbandmaterials zwischen etwa 150 und 500 µm liegt.

7. Verfahren nach Anspruch 4, dadurch gekennzeichnet, daß die Dicke des Lithiumbandmaterials etwa 200 bis 300 µm beträgt.

8. Verfahren nach Anspruch 2, dadurch gekennzeichnet, daß das Abwickeln des Lithiumbandmaterials unter Spannung erfolgt.

9. Verfahren nach Anspruch 8, dadurch gekennzeichnet, daß das Bandmaterial so gewalzt wird, daß eine dünne Lithiumfolie erhalten wird, deren Dicke zwischen etwa 5 µm und etwa 100 µm liegt.

10. Verfahren nach Anspruch 9, dadurch gekennzeichnet, daß die dünne Lithiumfolie eine Dicke aufweist, die zwischen etwa 20 µm und etwa 30 µm liegt.

11. Verfahren nach Anspruch 1, dadurch gekennzeichnet, daß zu Beginn des Walzvorgangs das Aufwickeln der dünnen Folie mit einer Spannung begonnen wird, die ermöglicht, die Folie von der Oberfläche der Walze abzuziehen, wenn der bestimmte Punkt einen Winkel von etwa 90° mit dem Kontaktpunkt und dem Mittelpunkt der Walze bildet, und die Spannung dann erhöht wird, so daß sich der bestimmte Punkt in eine Position verlagert, die zwischen 90° und dem Kontaktpunkt liegt.

12. Verfahren nach Anspruch 1, dadurch gekennzeichnet, daß sich die Zwischenposition bei etwa 45° in bezug auf den Kontaktpunkt und den Mittelpunkt der Walze befindet.

13. Verfahren nach Anspruch 11, dadurch gekennzeichnet, daß die Position des Winkels so kontrolliert wird, daß die Walz-Parameter, wie z.B. Art des Schmiermittels, Walzenspalt, Walzgeschwindigkeit und Dicke der erhaltenen Folie, optimiert werden.

14. Verfahren nach Anspruch 9, dadurch gekennzeichnet, daß am Eingang der beiden Walzzylinder ein Walzschmiermittel auf das Bandmaterial abgegeben wird, wobei das Walzschmiermittel aus einer flüchtigen organischen Flüssigkeit besteht, welche die Funktionsweise des Generators nicht beeinträchtigt, indem sie keine Rückstände auf der Folie hinterläßt, und die in ausreichender Menge eingesetzt wird, um für eine kontrollierte Haftung der Folie an der Walze zu sorgen.

15. Verfahren nach Anspruch 14, dadurch gekennzeichnet, daß das Walzschmiermittel einen aromatischen Kohlenwasserstoff umfaßt.

16. Verfahren nach Anspruch 15, dadurch gekennzeichnet, daß das Walzschmiermittel im wesentlichen aus Toluol besteht.

17. Verfahren nach Anspruch 14, dadurch gekennzeichnet, daß der flüchtigen organischen Flüssigkeit ein nicht-flüchtiges Additiv zugesetzt wird, das mit dem Lithium verträglich ist und das Walzen erleichtert und das auch mit der Funktionsweise eines elektrochemischen Generators verträglich ist.

18. Verfahren nach Anspruch 17, dadurch gekennzeichnet, daß die flüchtige organische Flüssigkeit aus einem Gemisch aus Hexanen und Toluol besteht.

19. Verfahren nach Anspruch 18, dadurch gekennzeichnet, daß das Additiv ein Polyoxyethylendistearat ist, dessen Polyethylen-Segment zwischen 200 und 5.000 variiert.

20. Verfahren nach Anspruch 17, dadurch gekennzeichnet, daß das Schmiermittel aus einer aliphatischen Flüssigkeit und/oder einer aromatischen Flüssigkeit besteht, der ein Polyoxyethylendistearat zugegeben wird, dessen Polyethylen-Segment zwischen 200 und 5.000 variiert.

21. Verfahren nach Anspruch 1, dadurch gekennzeichnet, daß Walzen verwendet werden, deren Oberflächenprotil unter 10 µm liegt.

22. Verfahren nach Anspruch 1, dadurch gekennzeichnet, daß der Walzvorgang in Luft mit maximal 1 % Luftfeuchtigkeit durchgeführt wird.

23. Verfahren nach Anspruch 1, dadurch gekennzeichnet, daß die Dicke des Bandmaterials durch dessen Hindurchführen durch das Walzwerk, das zumindest die beiden Arbeitswalzen umfaßt, um etwa 90 % verringert wird.

24. Verfahren nach Anspruch 1, dadurch gekennzeichnet, daß die dünne Folie aus dem Walzwerk mit einer Geschwindigkeit von bis zu 50 m/min abgegeben werden kann und daß der Abnahmewinkel eingesetzt wird, um eine Feinabstimmung der Walzparameter, wie z.B. Art des Schmiermittels, Walzenspalt, Walzgeschwindigkeit und Dicke der erhaltenen Folie, vorzunehmen.

25. Verfahren nach Anspruch 24, dadurch gekennzeichnet, daß die dünne Folie das Walzwerk mit einer Geschwindigkeit von bis zu 20 m/min verläßt.

26. Verfahren nach Anspruch 21, dadurch gekennzeichnet, daß Walzzylinder aus Polyacetal verwendet werden.

27. Verfahren nach Anspruch 1, dadurch gekennzeichnet, daß ein Walzschmiermittel verwendet wird, das mit dem Lithium und anderen Elementen eines Elektrolytpolymer-Akkumulators elektrochemisch verträglich ist.

## Claims

1. Process of lamination for producing thin films of lithium, from a sheet of lithium, which comprises passing the sheet between working rollers with a lamination lubricant to laminate the sheet into a thin film, and thereafter winding up said thin film on a winding roller, characterized in that working rollers are used having lamination surfaces of a material to which lithium does not adhere, there is provided a lamination lubricant which is compatible with lithium, is volatile or non volatile, and in the latter case, it should be compatible with the operation of a cell if it should remain on lithium, selecting a lubricant such that the thin film, at the outlet of the working rollers, remains attached on the surface of one of the rollers, up to a given point of the circumference of the latter passed a meeting point between the two rollers, so that the angled formed between said meeting point, said given point and the center of the roller does not exceed about 90°, and the thin film obtained is rolled up at the outlet of the rollers with a sufficient tension which, in any case, is lower than the elastic limit of the film of lithium to detach the latter from said roller at said given point, thereby obtaining a film of excellent inherent flatness.

2. Process according to claim 1, characterized in that the sheet is rolled on an unwinding roller, and the sheet of lithium which is rolled on the unwinding roller is thereafter unrolled.

3. Process according to claim 1, characterized in that said sheet is obtained by extrusion between 75 and 1000 µm.

4. Process according to claim 1, characterized in that said sheet is obtained by extrusion immediately before lamination.

5. Process according to claim 1, characterized in that a volatile lamination lubricant is used.

6. Process according to claim 1, characterized in that the thickness of the sheet of lithium is between about 150 and 500 µm.

7. Process according to claim 4, characterized in that the thickness of the sheet of lithium is about 200 to 300 µm.

8. Process according to claim 2, characterized in that the unrolling of the sheet of lithium is carried out under tension.

9. Process according to claim 8, characterized in that the sheet is laminated so as to obtain a thin f ilm of lithium whose thickness is between about 5 µm and about 100 µm.

10. Process according to claim 9, characterized in that the thin film of lithium has a thickness which is between about 20 µm and about 30 µm.

11. Process according to claim 1, characterized in that initially, during the lamination operation, rolling up of the thin film is initiated with a tension which enables to detach the film from the surface of the roller when said given point defines an angle of about 90° with said meeting point and the center of the roller, thereafter, the tension is increased so that this given point be moved into a position which is intermediate between 90° and said meeting point.

12. Process according to claim 1, characterized in that said intermediate position is located at about 45° with respect to said meeting point and the center of the roller.

13. Process according to claim 11, characterized in that it comprises controlling said position of said angle so as to optimize the lamination parameters, such as nature of the lubricant, opening of the rollers,speed of lamination and thickness of the film obtained.

14. Process according to claim 9, characterized in that it comprises pouring a lamination lubricant on the sheet at the inlet of the two lamination rollers, said lamination lubricant consisting of a volatile organic liquid which does not harm the operation of the cell so as not to leave any residue on the film, and being used in sufficient quantity to exert a controlled adhesion of the film on said roller.

15. Process according to claim 14, characterized in that the lamination lubricant comprises an aromatic hydrocarbon.

16. Process according to claim 15, characterized in that the lamination lubricant essentially consists of toluene.

17. Process according to claim 14, characterized in that a non volatile additive which is compatible with lithium, which facilitates lamination and which is also compatible with the operation of electrochemical cell is added to the volatile organic liquid.

18. Process according to claim 17, characterized in that the volatile organic liquid consists of a mixture of hexanes and toluene.

19. Process according to claim 18, characterized in that said additive is a polyoxyethylene distearate in which the polyethylene segment varies between 200 and 5000.

20. Process according to claim 17, characterized in that the lubricant consists of aliphatic liquid and/or an aromatic liquid to which a polyoxyethylene distearate whose polyethylene segment varies between 200 and 5000 is added.

21. Process according to claim 1, characterized in that the rollers have a surface profile lower than 10 µm.

22. Process according to claim 1, characterized in that the lamination operation is carried out in air containing at most 1% humidity.

23. Process according to claim 1, characterized in that passing the sheet in the rolling mill including at least the two working rollers reduces the thickness of the sheet by about 90%.

24. Process according to claim 1, characterized in that the thin film exits from the rolling mill at a speed up to 50 m/min., and the angle of detachment is used to adjust the parameters of lamination, such as nature of lubricant, opening of the rollers, lamination speed and thickness of the film obtained.

25. Process according to claim 24, characterized in that the thin film exits from the rolling machine at a speed up to 20 m/min.

26. Process according to claim 21, characterized in that the lamination rollers are made of polyacetal.

27. Process according to claim 1, characterized in that the lubricant is electrochemically compatible with lithium and other elements of a polymer electrolyte battery.
